# EUROPEAN PATENT SPECIFICATION

(11) **EP 4 143 716 B1**
(45) Date of publication and mention of the grant of the patent: **28.02.2024**
(21) Application number: 21722434.4
(22) Date of filing: 28.04.2021
(51) Int. Cl.: G06F 21/62

(54) **BLOCKHAIN NETWORK BASED LICENSE MANAGEMENT**
AUF BLOCKHAIN-NETZWERK BASIERENDE LIZENZVERWALTUNG
GESTION DE LICENCE BASÉE SUR UN RÉSEAU À CHAÎNE DE BLOCS

(30) Priority: 29.04.2020 SE 2030145
(43) Date of publication of application: 08.03.2023
(73) Proprietor: Atlas Copco Industrial Technique AB, 105 23 Stockholm (SE)
(72) Inventor: TANG, Lifei, 72340 Västerås (SE)
(74) Representative: Atlas Copco Industrial Technique AB
(86) International application number: PCT/EP2021/061065
(87) International publication number: WO 2021/219689

(56) References cited:
- US-A1- 2018 167 198
- US-A1- 2018 257 306
- US-A1- 2019 340 269
- JEFF HERBERT ET AL: "A Novel Method for Decentralised Peer-to-peer Software License Validation Using Cryptocurrency Blockchain Technology", PROCEEDINGS OF THE 38TH AUSTRALASIAN COMPUTER SCIENCE CONFERENCE (ACSC 2015), 30 January 2015 (2015-01-30), pages 27-35, XP055543368, Sydney, Australia,

## Description

### Field of the Invention

The present invention relates to an electric power tool being operable according to at least one of multiple features according to licenses being accessible to the electric power tool. The present invention further relates to a controller configured to control at least one electric power tool the according to licenses accessible to the controller, to a client comprising computer readable medium having stored thereon computer program means for providing access to licenses, to a method for license transfer using a blockchain network, and to a method for issuing a license.

### Background

Development of more intelligent devices has recently shifted the focus from hardware of the devices to software of the devices. Thus, it has been realized that the device's embedded software to a large part defines the functionalities of the device. This has also led to an increasing market for selling software, e.g. features and platforms.

The software embedded in a device is issued in the form of licenses to the owner of the device. For a license provider to efficiently issue and keep track of issued licenses a license management system is needed. Traditional license management systems normally employ a license server to track license transactions that control which features that may be used by a certain device.

However, traditional license management systems are vulnerable to single point of failures and may also suffer from trust issues between provider and buyer of a license.

Accordingly, it is desirable to improve the license management for devices. The following prior art documents are relevant for this problem setting: US2018/257306A1, US2019/340269A1, US2018/167198A1, and JEFF HERBERT ET AL: "A Novel Method for Decentralised Peer-to-peer Software License Validation Using Cryptocurrency Blockchain Technology", ACSC 2015, 30 January 2015 (2015-01-30), pages 27-35

### Summary

In view of the above-mentioned and other drawbacks of the prior art, it is an object of the present invention to provide an electric power tool which may access licenses through license transactions that are transparent to both sides of the transaction and that is less vulnerable to failures by being distributed. In particular, the present invention provides for the licenses being accessible through a blockchain network.

It is further an object of the invention to provide a corresponding controller for controlling an electric power tool, a client, and method for license transfers and issue.

According to a first aspect of the invention, there is provided an electric power tool being operable according to at least one of multiple features depending on licenses being accessible to the electric power tool using a private key adapted for providing access to licenses, the private key being storable in a client wallet associated with the electric power tool.

The licenses accessible for using the private key depends on license transactions successfully validated in a blockchain network.

The present invention is at least partly based on the realization that a blockchain network provides for distributed license management that is both transparent and immutable to tampering and thereby improves the trust between license provider and buyer. Further, it was realized to provide for each device, such as the electric power tool, to possess a private key securely stored in a client wallet, that allows for unlocking license content associated with a license transaction that has successfully been validated in the blockchain network. The accessible features are specified by the license content, thus by unlocking license content, further features become accessible to the electric power tool.

With the proposed methodology, it is only the electric power tool having the correct private key that can unlock the license content that was initially encrypted using the public key associated with the electric power tool. This public key may be stored as part of the record of the license transaction in a distributed ledger of the blockchain network, i.e. as part of a block in the blockchain. This efficiently keeps track of all license transactions in a secure manner, while at the same time allowing efficient access to licenses for the electronic power tool. Thus, the present invention provides an electric power tool with improved accessibility to licenses.

Generally, blockchain networks is a distributed ledger that keeps track of and stores transaction data. The blockchain network allows its participants to securely transfer data between them without central control. For the present disclosure, the blockchain network is used for storing and keeping track of license transaction data. Blockchain networks are considered known *per se* and will not be described in detail herein.

The license content specifies which features that the license enables. The license content may for example be provided as a string for specifying the features.

A feature according to a license may be associated with a function that the electric power tool may be operable to execute. A feature may relate to both hardware function and software related functions. Thus, an electric power tool may be technically able to operate according to several features, but in order to practically be able to use a particular feature, the appropriate license must be unlocked using the private key associated with the electric power tool.

A client wallet is a secure storage for storing certificates, private keys, and public keys.

A private key is used for requesting ownership via unlocking license content encrypted with the corresponding public key.

A public key is e.g. a public address of a client that can be used for transferring license ownership via encrypting the license content using the public key of the receiving client associated with the electric power tool that is to use the features unlocked by the transferred license.

A public key is public, i.e. it can be seen by other clients.

In embodiments, the blockchain network may be a permissioned blockchain network, wherein the client wallet comprises a certificate that provides access to the blockchain network for the client. A permissioned blockchain network only allows certified members to participate. This advantageously allows for keeping the license transactions between buyer and provider confidential to third parties. An example permissioned blockchain network is the open-source Hyperledger fabric platform.

The private key is preferably configured to decrypt license content in licenses successfully validated in the blockchain network and that are accessible to the electric power tool. This provides for only the electric power tool having the correct private key to gain access to the license content. For this, the license content is encrypted using a public key associated with the electric power tool. The encryption may be based on an asymmetric cryptography algorithm e.g. Elliptic Curve Cryptography (ECC) .

In embodiments, the electric power tool may comprise an associated client configured to communicate with the blockchain network. Thus, the electric power tool may be communicatively connected to a client which enables communication with the blockchain network. Preferably, each electric power tool, in a set of electric power tools of an e.g. a manufacturing line, assembly line, or similar, is associated with a dedicated client. Each electric power tool is operable to query licenses and license updates via its client. The associate client thus communicates with the blockchain network to initiate license transactions.

The electric power tool may comprise an electronic storage device configured to store the client wallet. The electronic storage device may be a hardware security module comprised in the electric power tool or being accessible to the electric power tool.

The hardware security module may be part of a cloud-based solution. Preferably, during normal operation and communication with the blockchain network, the private key is maintained on the electronic storage device. Thus, encryption and decryption are performed within the secure electronic storage device. A client may comprise means for obtaining an encryption or decryption that is performed on the hardware security module. Thus, the client may receive the result of the encryption or decryption.

The electric power tool may be controllable by a controller according to the licenses being accessible to the electric power tool. The controller may be comprised in the electric power tool.

According to a second aspect of the invention, there is provided a controller configured to control at least one electric power tool according to licenses accessible to the controller based on a private key adapted for providing access to licenses, the private key being storable in a client wallet associated with the controller, wherein the licenses accessible for using the private key depends on license transactions successfully validated in a blockchain network.

Accordingly, the controller comprises means for controlling the electric power tool and is communicatively connected with the electric power tool.

In embodiments, the controller may be configured to use the private key to decrypt license content in licenses successfully validated in a blockchain network and accessible to the controller.

Further effects and features of the second aspect of the invention are largely analogous to those described above in connection with the first aspect of the invention.

According to a third aspect of the invention, there is provided a client associated with a client wallet configured to store a private key configured to provide access to license content for a device, the client comprising a computer readable medium having stored thereon computer program means for providing access to licenses using the private key, wherein the client comprises: code for obtaining decrypted license content, the license content being decrypted using the private key of the client to thereby unlock features in the license content, the license content being received from a license transaction successfully validated in a blockchain network.

That the client obtains decrypted license content may refer to that the client receives decrypted license content from the client wallet, thus the decryption may be performed in the client wallet. It may also be possible that the decryption is performed by the client. Thus, the client may comprise code for decrypting the license content using the private key in the client wallet.

The device may be an electric power tool or a controller according to embodiments herein.

The client may be provided as a computer program product comprising the computer readable medium.

In embodiments, the client is a first client that may comprise code for obtaining encrypted license content, the license content being encrypted using a public key of a second client; code for providing a license transfer request to the blockchain network, the license transfer request including license ownership data comprising at least identification data of the second client in the form of the public key of the second client, and the encrypted license content, if the license transfer is successfully validated in the blockchain network, the license content is accessible to the second client via a private key in the second client's wallet.

That the client obtains encrypted license content may refer to that the client receives encrypted license content from the client wallet, thus the encryption may be performed in the client wallet. It may also be possible that the encryption is performed by the client. Thus, the client may comprise code for encrypting the license content using the public key of the second client.

For example, if the client comprises the client wallet, the client may comprise code for encryption and decryption.

In embodiments, the blockchain network being a permissioned blockchain network comprising peers associated with the license provider and peers associated with the license receiver organization holding the clients. This advantageously provides for the license provider and the license receiver, e.g. license buyer, to co-host the permissioned blockchain network to thereby increase the trustworthiness and transparency of the license transactions. Further, the license transactions are advantageously only trackable by the license provider and the license receiver.

Preferably, the private key may be stored in a hardware security module of an electric power tool associated with the respective client or in a cloud-based storage and is accessible to the respective client.

Further effects and features of the third aspect of the invention are largely analogous to those described above in connection with the first aspect and the second aspect of the invention.

According to a fourth aspect of the invention, there is provided A method for a license transfer from a first client to a second client, the method comprising: decrypting the license content using the private key of the first client; encrypting the license content using the public key of the second client; providing a license request to a blockchain network, the license request including license ownership data comprising at least identification data of the second client in the form of the public key of the second client, and the encrypted license content, wherein, if the license transfer is successfully validated in the blockchain network, the license content becomes accessible to the second client using a private key in the second client's wallet.

Preferably, the license content may be decryptable using a private key of the second client.

Preferably, during validation, a check of the license count of the owner of the clients is performed. If the license count indicates that the number of licenses used by the clients of the owner do not exceed a threshold given by the number of licenses bought from the license provider, the license transfer may be successfully validated.

Further effects and features of the fourth aspect of the invention are largely analogous to those described above in connection with the previous aspects of the invention.

There is further provided a method for issuing a license from a license provider to a license buyer client, the method comprising: encrypting license content of the license using a public key of the license buyer client; providing a license request to the blockchain network by the license provider, the license request including license ownership data comprising at least identification data of the license buyer client in the form of the public key of the license buyer client, and the encrypted license content, wherein, if the license issue transaction is successfully validated in the blockchain network, the license content becomes accessible to the license buyer client using a private key in the license buyer client's wallet.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 conceptually illustrates an electric power tool having an associated client and client wallet according to embodiments of the invention;
Fig. 2 conceptually illustrates a set of electric power tools each comprising an associated client configured to communicate with a permissioned blockchain network according to embodiments of the invention;
Fig. 3 schematically illustrates a transfer license transaction according to embodiments of the invention;
Fig. 4 conceptually illustrates an electric power tool controllable by a controller having an associated client and client wallet according to embodiments of the invention;
Fig. 5 is a flow-chart of method steps according to embodiments of the invention; and
Fig. 6 is a flow-chart of method steps according to embodiments of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention. Like reference characters refer to like elements throughout.

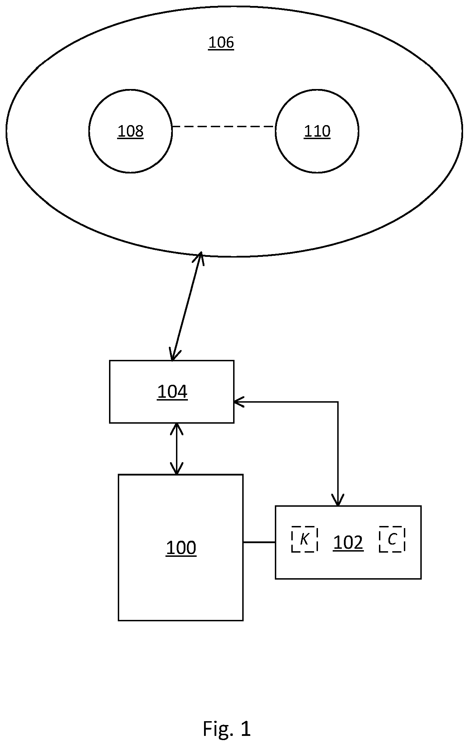

Fig. 1 conceptually illustrates an electric power tool 100 being operable according to at least one of multiple features depending on licenses being accessible to the electric power tool using a private key K adapted for providing access to licenses, the private key being storable in a client wallet 102 associated with the electric power tool 100. The licenses that are accessible for using the private key depends on license transactions successfully validated in a blockchain network 106.

The electric power tool may for example be operable in an assembly line or in a manufacturing setting and being operable to perform certain actions depending on the hardware of the electric power tool and the features being accessible to the electric power tool via the private key. Thus, an electric power tool herein may be provided in various forms and should be interpreted broadly and may relate to various assembly and machining tools. Electric power tools according to the present disclosure may be operative according to operation strategies and functionalities that are accessible to the electric power tool through difference licenses. As an example, an electric power tool may be adapted to provide a torque for assembly purposes, e.g. tightening bolts or screws as performed by a so-called nutrunner. An electric power tool may in such case support a plurality of operation strategies, i.e. tightening strategies, e.g. 2-step, 3-step, multistep tightening strategies. The electric power tool may report its operation result, e.g. tightening result to a user or to a control unit. Tightening strategies may be accessible according to licenses.

Other example electric power tools may be electric tightening tools, electric riveting tools, electric gluing tools, electric drilling tools, and other electric machining tools.

The blockchain network 106 is preferably a permissioned blockchain network 106. The permissioned blockchain network is only accessible to certified clients, whereby the client wallet comprises a certificate C that provides access to the blockchain network for the client 104. For example, the permissioned blockchain network 106 may be based on a Hyperledger fabric platform where the license provider and the license buyer co-host the permissioned blockchain network 106. Thus, the permissioned blockchain network 106 comprising peers 108 associated with the license provider and peers 110 associated with the license receiver organization holding the client 104. The notations 108 and 110 typically comprises several peers, each connected with all and each of the other peers in 108 and 110, as is generally the case in blockchain networks.

The blockchain network may be based on a Hyperledger Fabric platform where the peers host smart contracts for executing license transactions. Hyperledger fabric platforms are generally known *per se* to the skilled person and will not be described in detail herein. However, other permissioned blockchain networks are conceivable and the Hyperledger fabric is mentioned purely as an example.

Generally, transactions will be endorsed by peers 108, 110 if they are executed correctly. For the transaction proposals that compiled with an endorsement policy, the transactions are then packaged to blocks in sequence, then broadcast to all peers. The valid transactions are committed to the blockchain ledger, world state value and version are updated based on the corresponding transaction. For the present disclosure, the blockchain network is used for storing and keeping track of license transaction data.

Accordingly, the peers 108, 110, i.e. the permissioned blockchain network 106, maintain a ledger that stores the records of license transactions, and hosts smart contracts executed for conducting license ownership transactions and updating the license ownership states, i.e. the "world state" of the permissioned blockchain network 106.

By invoking a license smart contract, a client application is able to issue new licenses, transfer license's ownership, query all license and query specific owner's, e.g. client's licenses.

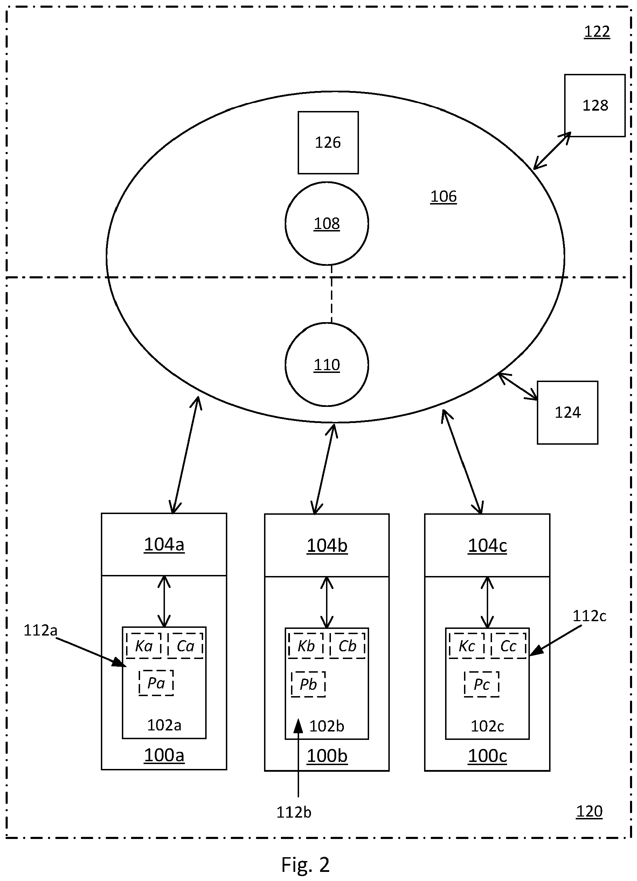

Fig. 2 conceptually illustrates a set of electric power tools 100a-c, each comprising an associated client 104a-c. The clients 104a-c are configured to communicate with the permissioned blockchain network 106 and has access to the client wallet 102a-c. Here, each electric power tool 100a-c comprises an electronic storage device 112a-c configured to store the client wallet 102a-c.

The electronic storage device 112a-c is preferably a hardware security module which stores the private keys *Ka-c* and the certificates *Ca-c.* Encryption and decryption operations are performed on the respective hardware security module 112a-c. The hardware security module may equally well be a cloud-based solution, e.g. being a storage on a server.

A buyer organization 120 holding the clients 104a-c may purchase features from a license provider (i.e. a seller) organization's 122 license portal 128 which may upload the corresponding amount of license to a feature manager 124 of the buyer organization 120. The license feature manager comprises a client in order to accept licenses from the license portal 128. The feature license manager may also redistribute licenses within the buyer organization 120. The buyer organization 120 may then assign licenses to different devices 104a-c which can unlock features based on the licenses using the private keys *Ka-c* stored in the client wallet 102 to decrypt license content.

The license portal 128 may have an associated admin client of the license provider organization's 122 that has an access level that allows it to use an issue function for issuing new license ownership data that represents a state of license ownership, including e.g. an ID of the license data, a name of the license, a count of the number of licenses possessed by the owner, license expiry data, the owners public key, and the license content, i.e. the features that the license enables. The difference between the admin client and other clients is mainly theirs access levels that allows them to use different functions, i.e. to invoke different functionalities of a smart contract.

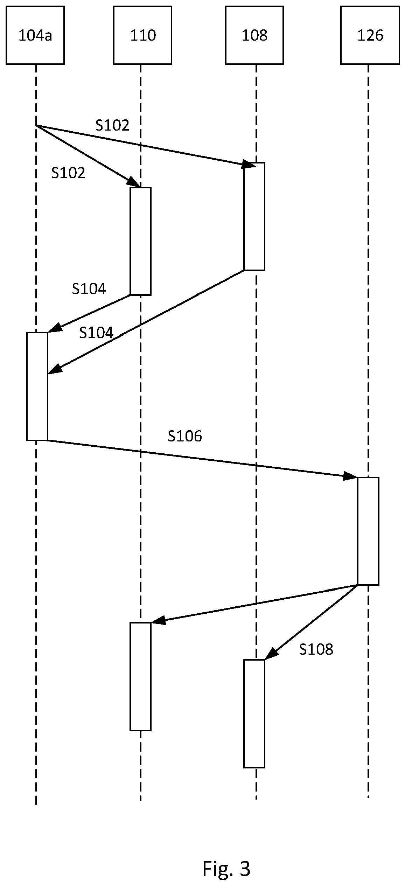

A license assignment will now be described with reference to fig. 2 in conjunction with fig. 3. The process described in fig. 3 is based on the Hyperledger fabric work-flow.

A license assignment may be initiated by a license transfer request from a first client, e.g. client 104a. The first client 104a decrypts the license content with its associated private key Ka and encrypts the license content with the new owner's public key, here the new owner is client 104b having public key *Pb*. The public key of a client can thus be seen by other clients even if it is stored in the client wallet. For example, the public key may be embedded in a certificate, e.g. a so-called X.509 certificate, that is stored in the client wallet but publicly accessible to other client's through a public key infrastructure (PKI) accessible to clients with valid certificates. In other words, the PKI is private in the sense that only selected clients may access the PKI, i.e. client's associated with the permissioned blockchain network 106.

The license transfer request including license ownership data comprising at least identification data of the second client in the form of the public key *Pb* of the second client 104b, and encrypted license content being encrypted by the public key Pb of the second client 104b. The license transfer request further comprises the certificate Ca of the client 104a.

The license transaction request is provided S102 by the client 104a to the permissioned blockchain network 106 comprises endorsing peers 110 of the buyer's organization 120 and endorsing peers 108 of the license provider's organization 122. The endorsing peers 108, 110 check the identity and authorizations of the clients 104a-b, check if the clients 104a-b are allowed to contact the blockchain network 106. If the license transactions are successfully executed e.g. by a so-called smart contract running on the peers, they return S104 an endorsement result. As is known to the skilled person, a smart contract is an algorithm or a computer implemented method for performing certain acts, such as executing transactions as mentioned above.

If enough endorsements are collected according to an endorsement policy, for example that at least one peer from each organization 120, 122, endorsed the transaction request, then the client 104a sends S106 the license transaction request to an order service 126 of the license provider's organization 122.

The order service 126 packages the transaction into a block and informs S108 leader peers in each organization regarding the ledger update. The leader peers broadcast the ledger update to the other peers which validate the transactions and update the ledger.

Subsequently, the second client 104b may use its private key *Kb* to decrypt license content in licenses successfully validated in the blockchain network and accessible to the client 104b of the electric power tool.

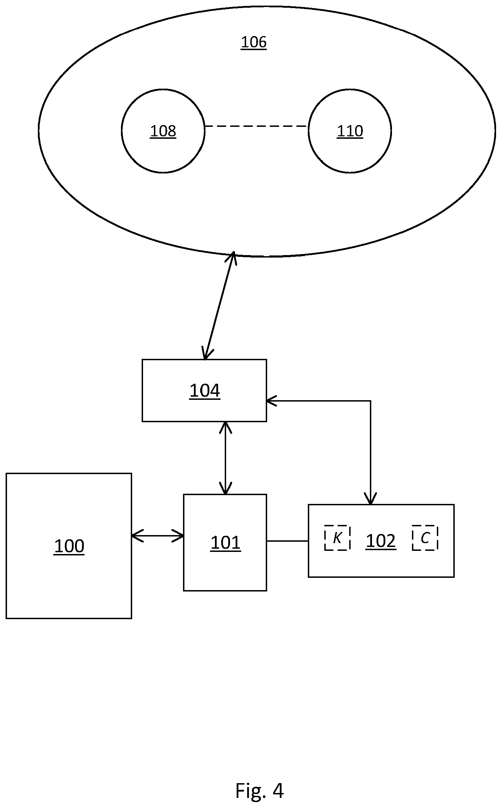

Turning now to fig. 4, preferably, the electric power tool 100 is controllable by a controller 101 according to the licenses being accessible to the controller. In embodiments, the electric power tool 100 comprises the controller 101.

In one aspect, there is provided a controller 101 configured to control at least one electric power tool 100 the according to licenses accessible to the controller based on a private key K adapted for providing access to licenses. The private key being storable in a client wallet 102 associated with the controller 101. The licenses accessible using the private key depends on license transactions successfully validated in a blockchain network 106. Thus, it may be the controller 101 that has access to the client wallet 102.

Accordingly, the controller 101 may be configured to use the private key *K* to decrypt license content in licenses successfully validated in a blockchain network 106 and accessible to the controller.

Further, the client 104 is associated with a device which may be either the controller 101 and/or the electric power tool 100, being operable according to at least one of multiple features according to licenses being accessible to the device 101, 104.

The client 104 comprises code for obtaining decrypted license content, the license content being decrypted using the private key of the client to thereby unlock features specified by the license content. The license content being received from a license transaction successfully validated in the blockchain network 106. This provides for unlocking features in the license for the device 101, or 100 using the private key stored in the client wallet 102 associated with the device 101 or 100.

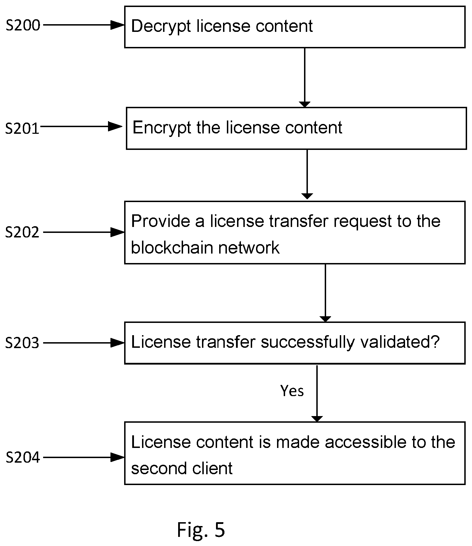

Fig. 5 is a flow-chart of method steps according to embodiments of the invention. In step S200, decrypting the license content using a private key of a first client. Further, in step S201, encrypting the license content using the public key of the second client.

In step S202 providing a license transfer request to a blockchain network, the license request including license ownership data comprising at least identification data of the second client in the form of the public key of the second client, and the encrypted license content.

If the license transfer is successfully validated S203 in the blockchain network, the license content becomes accessible to the second client using a private key in the second client's wallet. Thus, license content is made accessible 5204 to the second client.

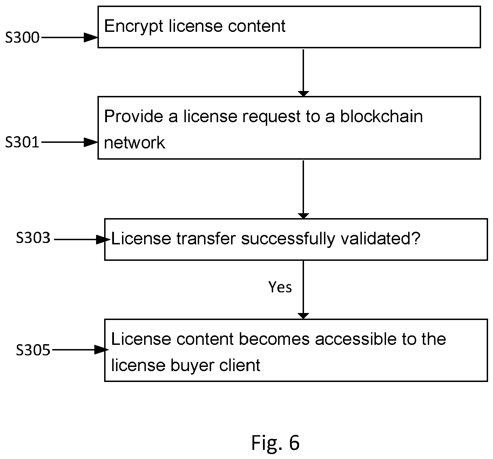

Fig. 6 is a flow-chart of method steps according to embodiments of the invention. The method is for issuing a license from a license provider to a license buyer client. In step S300, encrypting license content of the license using a public key of the license buyer client. In this way, the license content is only accessible using the private key of the license buyer client.

In step S301 providing a license request to the blockchain network by the license provider. The license request includes license ownership data comprising at least identification data of the license buyer client in the form of a public key of the license buyer client, and the encrypted license content.

If the license transfer is successfully validated, S303 in the blockchain network, the license content of the license becomes accessible to the license buyer client using a private key in the license buyer client's wallet in step S305. The license transaction record is stored in the blockchain database.

In some possible implementations is user access control applied. For example, a license provider client, i.e. a client of the legal license issuer selling the license, holds a certificate which allows it to issue a license, whereas clients of the license buyer do not possess such certificate. Further, another example of user access control is that a licence buyer client cannot query the licenses of other organizations such as the license provider organization. Thus, a certificate comprising the affiliation and permissions of a license buyer client does only provide permission to query the licences within the organization of the client, and not licenses held outside the organization of the client.

A license provider client may comprise a computer readable medium having stored thereon computer program means for issuing licenses to a license buyer client, wherein the client comprises code for encrypting license content of the license using a public key of the license buyer client; code for providing a license request to the blockchain network by the license provider, the license request including license ownership data comprising at least identification data of the license buyer client in the form of the public key of the license buyer client, and the encrypted license content, wherein, if the license issue transaction is successfully validated in the blockchain network, the license content becomes accessible to the license buyer client using a private key in the license buyer client's wallet.

A controller may comprise or be provided as a control unit. A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The controller may in some possible implementations be cloud-based, e.g. located on a server remote from the electric power tool.

A client may be provided as a software operative on a control unit. For example, the client may be provided as a software development kit, software library, or a restful application specific application.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

Generally, all terms used in the claims are to be interpreted according to their ordinary meaning in the technical field, unless explicitly defined otherwise herein.

## Claims

1. An electric power tool (100) being operable according to at least one of multiple features associated with functions that the electric power tool is operable to execute depending on licenses being accessible to the electric power tool using a private key (*K*) adapted for providing access to licenses, the private key being stored in a client wallet (102) associated with the electric power tool,
wherein the licenses accessible using the private key depends on license transactions successfully validated in a permissioned blockchain network (106), wherein the client wallet comprises a certificate (*C*) that provides access to the permissioned blockchain network for a client of the electric power tool.

2. The electric power tool according to claim 1, wherein the private key is configured to decrypt license content in licenses successfully validated in the blockchain network and accessible to the electric power tool.

3. The electric power tool according to any one of the preceding claims, comprising an associated client (104) configured to communicate with the blockchain network.

4. The electric power tool according to any one of the preceding claims, comprising an electronic storage device (112a-c) configured to store the client wallet.

5. The electric power tool according to any one of the preceding claims, controllable by a controller (101) according to the licenses being accessible to the electric power tool.

6. The electric power tool according to claim 5, comprising the controller.

7. A controller configured to control at least one electric power tool to operate according to at least one of multiple features associated with functions that the electric power tool is operable to execute according to licenses accessible to the controller based on a private key adapted for providing access to licenses, the private key being stored in a client wallet associated with the electric power tool,
wherein the licenses accessible for using the private key depends on license transactions successfully validated in a permissioned blockchain network, wherein the client wallet comprises a certificate (*C*) that provides access to the permissioned blockchain network for a client of the electric power tool.

8. The controller according to claim 7, wherein the controller is configured to use the private key to decrypt license content in licenses successfully validated in the permissioned blockchain network and accessible to the controller.

9. A client associated with a client wallet associated with a device, the client wallet having stored a private key configured to provide access to license content for a device operable according to at least one of multiple features associated with functions that the device is operable to execute according to license content accessible to the device, the client comprising a computer readable medium having stored thereon computer program means for providing access to licenses using the private key, wherein the client comprises:
code for obtaining decrypted license content, the license content being decrypted using the private key to thereby unlock features in the license content, the license content being received from a license transaction successfully validated in the permissioned blockchain network accessible to the client using a certificate (*C*) stored in the client wallet associated with the device.

10. The client according to claim 9, the client being a first client comprising:
code for obtaining encrypted license content, the license content being encrypted using a public key of a second client;
code for providing a license transfer request to the blockchain network, the license transfer request including license ownership data comprising at least identification data of the second client in the form of the public key of the second client, and the encrypted license content,
if the license transfer is successfully validated in the blockchain network, the license content is accessible to the second client via a private key in the second client's wallet.

11. The client according to any one of claims 9 and 10, the permissioned blockchain network comprising peers associated with the license provider and peers associated with the license receiver organization holding the clients.

12. The client according to any one of claims 9 to 10, wherein the private key is stored in a hardware security module of an electric power tool associated with the respective client or in a cloud-based storage and is accessible to the respective client.

13. A method for a license transfer from a first client to a second client, the method comprising:
decrypting (S200) the license content using the private key of the first client;
encrypting (S201) the license content using the public key of the second client;
providing (S202) a license request to a permissioned blockchain network, the license request including license ownership data comprising at least identification data of the second client in the form of the public key of the second client, and the encrypted license content,
wherein, if the license transfer is successfully validated in the blockchain network accessible to the second client using a certificate (*C*) stored in the second client's wallet associated with the electric power tool, the license content becomes accessible (S204) to the second client using a private key stored in the second client's wallet associated with the electric power tool, whereby the second client is configured to provide access to the license content for the electric power tool operable according to at least one of multiple features associated with functions that the electric power tool is operable to execute according to the license content.

14. A method for issuing a license from a license provider to a license buyer client, the method comprising:
encrypting (S300) license content of the license using a public key of the license buyer client;
providing (S301) a license request to a permissioned blockchain network by the license provider, the license request including license ownership data comprising at least identification data of the license buyer client in the form of the public key of the license buyer client, and the encrypted license content,
wherein, if the license issue transaction is successfully validated in the permissioned blockchain network accessible to the license buyer client using a certificate (*C*) stored in the license client's wallet associated with an electric power tool, the license content becomes accessible (S305) to the license buyer client using a private key stored in the license buyer client's wallet associated with the electric power tool, whereby the license buyer client is configured to provide access to the license content for the electric power tool operable according to at least one of multiple features associated with functions that the electric power tool is operable to execute according to the license content.

## Patentansprüche

1. Elektrowerkzeug (100), das gemäß mindestens einem von mehreren Merkmalen betriebsfähig ist, die Funktionen zugeordnet sind, für die das Elektrowerkzeug betriebsfähig ist, sie in Abhängigkeit von Lizenzen auszuführen, die für das Elektrowerkzeug unter Verwendung eines privaten Schlüssels (*K*), der zum Bereitstellen eines Zugangs zu Lizenzen angepasst ist, zugänglich sind, wobei der private Schlüssel in einem Client-Wallet (102), das dem Elektrowerkzeug zugeordnet ist, gespeichert ist,
wobei die Lizenzen, die unter Verwendung des privaten Schlüssels zugänglich sind, von Lizenztransaktionen, die in einem permissioned Blockchain-Netzwerk (106) erfolgreich validiert werden, abhängen, wobei das Client-Wallet ein Zertifikat (*C*), das Zugang zu dem permissioned Blockchain-Netzwerk für einen Client des Elektrowerkzeugs bereitstellt, umfasst.

2. Elektrowerkzeug nach Anspruch 1, wobei der private Schlüssel konfiguriert ist, um einen Lizenzinhalt in Lizenzen, die in dem Blockchain-Netzwerk erfolgreich validiert werden und für das Elektrowerkzeug zugänglich sind, zu entschlüsseln.

3. Elektrowerkzeug nach einem der vorstehenden Ansprüche, umfassend einen zugeordneten Client (104), der konfiguriert ist, um mit dem Blockchain-Netzwerk zu kommunizieren.

4. Elektrowerkzeug nach einem der vorstehenden Ansprüche, umfassend eine elektronische Speichervorrichtung (112a-c), die konfiguriert ist, um das Client-Wallet zu speichern.

5. Elektrowerkzeug nach einem der vorstehenden Ansprüche, das durch eine Steuerung (101) gemäß den Lizenzen, die für das Elektrowerkzeug zugänglich sind, steuerbar ist.

6. Elektrowerkzeug nach Anspruch 5, umfassend die Steuerung.

7. Steuerung, die konfiguriert ist, um mindestens ein Elektrowerkzeug zu steuern, um gemäß mindestens einem von mehreren Merkmalen in Betrieb zu sein, die Funktionen zugeordnet sind, für die das Elektrowerkzeug betriebsfähig ist, um sie gemäß Lizenzen, die für die Steuerung zugänglich sind, basierend auf einem privaten Schlüssel, der zum Bereitstellen des Zugangs zu Lizenzen angepasst ist, auszuführen, wobei der private Schlüssel in einem Client-Wallet, das dem Elektrowerkzeug zugeordnet ist, gespeichert ist,
wobei die Lizenzen, die zum Verwenden des privaten Schlüssels zugänglich sind, von Lizenztransaktionen, die in einem permissioned Blockchain-Netzwerk erfolgreich validiert werden, abhängen, wobei das Client-Wallet ein Zertifikat (*C*), das Zugang zu dem permissioned Blockchain-Netzwerk für einen Client des Elektrowerkzeugs bereitstellt, umfasst.

8. Steuerung nach Anspruch 7, wobei die Steuerung konfiguriert ist, um den privaten Schlüssel zu verwenden, um den Lizenzinhalt in Lizenzen, die in dem permissioned Blockchain-Netzwerk erfolgreich validiert werden und für die Steuerung zugänglich sind, zu entschlüsseln.

9. Client, der einem Client-Wallet zugeordnet ist, das einer Vorrichtung zugeordnet ist, wobei das Client-Wallet einen privaten Schlüssel gespeichert aufweist, der konfiguriert ist, um Zugang zu dem Lizenzinhalt für eine Vorrichtung bereitzustellen, die gemäß mindestens einem von mehreren Merkmalen betriebsfähig ist, die Funktionen zugeordnet sind, für die die Vorrichtung betriebsfähig ist, um sie gemäß dem Lizenzinhalt, der für die Vorrichtung zugänglich ist, auszuführen, der Client umfassend ein computerlesbares Medium, das darauf gespeicherte Computerprogrammmittel zum Bereitstellen des Zugangs zu Lizenzen unter Verwendung des privaten Schlüssels aufweist, wobei der Client umfasst:
Code zum Erhalten eines entschlüsselten Lizenzinhalts, wobei der Lizenzinhalt unter Verwendung des privaten Schlüssels entschlüsselt wird, um dadurch Merkmale in dem Lizenzinhalt zu entsperren, wobei der Lizenzinhalt von einer Lizenztransaktion empfangen wird, die in dem permissioned Blockchain-Netzwerk erfolgreich validiert wird, das für den Client unter Verwendung eines Zertifikats (*C*) zugänglich ist, das in dem Client-Wallet, das der Vorrichtung zugeordnet ist, gespeichert ist.

10. Client nach Anspruch 9, wobei der Client ein erster Client ist, umfassend:
Code zum Erhalten des verschlüsselten Lizenzinhalts, wobei der Lizenzinhalt unter Verwendung eines öffentlichen Schlüssels eines zweiten Clients verschlüsselt wird;
Code zum Bereitstellen einer Lizenzübertragungsanforderung an das Blockchain-Netzwerk, wobei die Lizenzübertragungsanforderung Lizenzbesitzdaten, umfassend mindestens Identifikationsdaten des zweiten Clients in der Form des öffentlichen Schlüssels des zweiten Clients, und den verschlüsselten Lizenzinhalt einschließt,
wobei, falls die Lizenzübertragung in dem Blockchain-Netzwerk erfolgreich validiert wird, der Lizenzinhalt für den zweiten Client über einen privaten Schlüssel in dem Wallet des zweiten Clients zugänglich ist.

11. Client nach einem der Ansprüche 9 und 10, das permissioned Blockchain-Netzwerk umfassend Peers, die dem Lizenzanbieter zugeordnet sind, und Peers, die der Lizenzempfängerorganisation, die die Clients hält, zugeordnet sind.

12. Client nach einem der Ansprüche 9 bis 10, wobei der private Schlüssel in einem Hardware-Sicherheitsmodul eines Elektrowerkzeugs, das dem jeweiligen Client zugeordnet ist, oder in einem cloudbasierten Speicher gespeichert ist und für den jeweiligen Client zugänglich ist.

13. Verfahren für eine Lizenzübertragung von einem ersten Client zu einem zweiten Client, das Verfahren umfassend:
Entschlüsseln (S200) des Lizenzinhalts unter Verwendung des privaten Schlüssels des ersten Clients;
Verschlüsseln (S201) des Lizenzinhalts unter Verwendung des öffentlichen Schlüssels des zweiten Clients;
Bereitstellen (S202) einer Lizenzanforderung an ein permissioned Blockchain-Netzwerk, wobei die Lizenzanforderung Lizenzbesitzdaten, umfassend mindestens Identifikationsdaten des zweiten Clients in der Form des öffentlichen Schlüssels des zweiten Clients, und den verschlüsselten Lizenzinhalt einschließt,
wobei, falls die Lizenzübertragung in dem Blockchain-Netzwerk erfolgreich validiert wird, das für den zweiten Client unter Verwendung eines Zertifikats (C) zugänglich ist, das in dem Wallet des zweiten Clients, das dem Elektrowerkzeug zugeordnet ist, gespeichert ist, der Lizenzinhalt für den zweiten Client unter Verwendung eines privaten Schlüssels, der in dem Wallet des zweiten Clients gespeichert ist, das dem Elektrowerkzeug zugeordnet ist, zugänglich wird (S204), wodurch der zweite Client konfiguriert ist, um den Zugang zu dem Lizenzinhalt für das Elektrowerkzeug bereitzustellen, das gemäß mindestens einem von mehreren Merkmalen betriebsfähig ist, die Funktionen zugeordnet sind, für die das Elektrowerkzeug betriebsfähig ist, um sie gemäß dem Lizenzinhalt auszuführen.

14. Verfahren zum Ausgeben einer Lizenz von einem Lizenzanbieter an einen Lizenzkäufer-Client, das Verfahren umfassend:
Verschlüsseln (S300) des Lizenzinhalts der Lizenz unter Verwendung eines öffentlichen Schlüssels des Lizenzkäufer-Clients;
Bereitstellen (S301) einer Lizenzanforderung an ein permissioned Blockchain-Netzwerk durch den Lizenzanbieter, wobei die Lizenzanforderung Lizenzbesitzdaten, umfassend mindestens Identifikationsdaten des Lizenzkäufer-Clients in der Form des öffentlichen Schlüssels des Lizenzkäufer-Clients, und den verschlüsselten Lizenzinhalt einschließt, wobei, falls die Lizenzausgabetransaktion in dem permissioned Blockchain-Netzwerk erfolgreich validiert wird, das für den Lizenzkäufer-Client unter Verwendung eines Zertifikats (*C*) zugänglich ist, das in dem Wallet des Lizenz-Clients, das einem Elektrowerkzeug zugeordnet ist, gespeichert wird, der Lizenzinhalt für den Lizenzkäufer-Client unter Verwendung eines privaten Schlüssels, der in dem Wallet des Lizenzkäufer-Clients gespeichert ist, das dem Elektrowerkzeug zugeordnet ist, zugänglich wird (S305), wodurch der Lizenzkäufer-Client konfiguriert ist, um Zugang zu dem Lizenzinhalt für das Elektrowerkzeug bereitzustellen, das gemäß mindestens einem von mehreren Merkmalen betriebsfähig ist, die Funktionen zugeordnet sind, für die das Elektrowerkzeug betriebsfähig ist, um sie gemäß dem Lizenzinhalt auszuführen.

## Revendications

1. Outil électrique (100) pouvant fonctionner selon au moins une caractéristique parmi de multiples caractéristiques associées à des fonctions que l'outil électrique est apte à exécuter en fonction de licences accessibles à l'outil électrique à l'aide d'une clé privée (*K*) conçue pour fournir un accès à des licences, la clé privée étant stockée dans un portefeuille client (102) associé à l'outil électrique,
dans lequel les licences accessibles à l'aide de la clé privée dépendent de transactions de licence validées avec succès dans un réseau de chaîne de blocs autorisé (106), dans lequel le portefeuille client comprend un certificat (*C*) qui fournit un accès au réseau de chaîne de blocs autorisé pour un client de l'outil électrique.

2. Outil électrique selon la revendication 1, dans lequel la clé privée est configurée pour déchiffrer un contenu de licence dans des licences validées avec succès dans le réseau de chaîne de blocs et accessibles à l'outil électrique.

3. Outil électrique selon l'une quelconque des revendications précédentes, comprenant un client associé (104) configuré pour communiquer avec le réseau de chaîne de blocs.

4. Outil électrique selon l'une quelconque des revendications précédentes, comprenant un dispositif de stockage électronique (112a-c) configuré pour stocker le portefeuille client.

5. Outil électrique selon l'une quelconque des revendications précédentes, pouvant être commandé par un dispositif de commande (101) selon les licences accessibles à l'outil électrique.

6. Outil électrique selon la revendication 5, comprenant le dispositif de commande.

7. Dispositif de commande configuré pour commander au moins un outil électrique pour qu'il fonctionne selon au moins une caractéristique parmi de multiples caractéristiques associées à des fonctions que l'outil électrique est apte à exécuter en fonction de licences accessibles au dispositif de commande sur la base d'une clé privée conçue pour fournir un accès à des licences, la clé privée étant stockée dans un portefeuille client associé à l'outil électrique,
dans lequel les licences accessibles à l'aide de la clé privée dépendent de transactions de licence validées avec succès dans un réseau de chaîne de blocs autorisé, dans lequel le portefeuille client comprend un certificat (*C*) qui fournit un accès au réseau de chaîne de blocs autorisé pour un client de l'outil électrique.

8. Dispositif de commande selon la revendication 7, dans lequel le dispositif de commande est configuré pour utiliser la clé privée pour déchiffrer le contenu de licence dans des licences validées avec succès dans le réseau de chaîne de blocs autorisé et accessibles au dispositif de commande.

9. Client associé à un portefeuille client associé à un dispositif, le portefeuille client ayant stocké une clé privée configurée pour fournir un accès à un contenu de licence pour un dispositif pouvant fonctionner selon au moins une caractéristique parmi de multiples caractéristiques associées à des fonctions que le dispositif est apte à exécuter en fonction d'un contenu de licence accessible au dispositif, le client comprenant un support lisible par ordinateur sur lequel est stocké un moyen de programme informatique destiné à fournir un accès à des licences à l'aide de la clé privée, dans lequel le client comprend :
un code permettant d'obtenir un contenu de licence déchiffré, le contenu de licence étant déchiffré à l'aide la clé privée pour ainsi débloquer des caractéristiques dans le contenu de licence, le contenu de licence étant reçu d'une transaction de licence validée avec succès dans le réseau de chaîne de blocs autorisé accessible au client à l'aide d'un certificat (*C*) stocké dans le portefeuille client associé au dispositif.

10. Client selon la revendication 9, le client étant un premier client comprenant :
un code permettant d'obtenir un contenu de licence chiffré, le contenu de licence étant chiffré à l'aide d'une clé publique d'un second client ;
un code permettant de fournir une demande de transfert de licence au réseau de chaîne de blocs, la demande de transfert de licence incluant des données de propriété de licence comprenant au moins des données d'identification du second client sous la forme de la clé publique du second client, et le contenu de licence chiffré,
si le transfert de licence est validé avec succès dans le réseau de chaîne de blocs, le contenu de licence est accessible au second client par l'intermédiaire d'une clé privée dans le portefeuille du second client.

11. Client selon l'une quelconque des revendications 9 et 10, le réseau de chaîne de blocs autorisé comprenant des pairs associés au fournisseur de licences et des pairs associés à l'organisation de récepteur de licence contenant les clients.

12. Client selon l'une quelconque des revendications 9 à 10, dans lequel la clé privée est stockée dans un module de sécurité matériel d'un outil électrique associé au client respectif ou dans un stockage basé sur le nuage et est accessible au client respectif.

13. Procédé permettant un transfert de licence d'un premier client à un second client, le procédé comprenant :
le déchiffrement (S200) du contenu de licence à l'aide de la clé privée du premier client ;
le chiffrement (S201) du contenu de licence à l'aide de la clé publique du second client ;
la fourniture (S202) d'une demande de licence à un réseau de chaîne de blocs autorisé, la demande de licence incluant des données de propriété de licence comprenant au moins des données d'identification du second client sous la forme de la clé publique du second client, et le contenu de licence chiffré,
dans lequel, si le transfert de licence est validé avec succès dans le réseau de chaîne de blocs accessible au second client à l'aide d'un certificat (C) stocké dans le portefeuille du second client associé à l'outil électrique, le contenu de licence devient accessible (S204) au second client à l'aide d'une clé privée stockée dans le portefeuille du second client associé à l'outil électrique, moyennant quoi le second client est configuré pour fournir un accès au contenu de licence pour l'outil électrique pouvant fonctionner selon au moins une caractéristique parmi de multiples caractéristiques associées à des fonctions que l'outil électrique est apte à exécuter en fonction du contenu de licence.

14. Procédé permettant de délivrer une licence d'un fournisseur de licences à un client acheteur de licence, le procédé comprenant :
le chiffrement (S300) d'un contenu de licence de la licence à l'aide d'une clé publique du client acheteur de licence ;
la fourniture (S301) d'une demande de licence à un réseau de chaîne de blocs autorisé par le fournisseur de licences, la demande de licence incluant des données de propriété de licence comprenant au moins des données d'identification du client acheteur de licence sous la forme de la clé publique du client acheteur de licence, et le contenu de licence chiffré,
dans lequel, si la transaction de délivrance de licence est validée avec succès dans le réseau de chaîne de blocs autorisé accessible au client acheteur de licence à l'aide d'un certificat (*C*) stocké dans le portefeuille du client de licence associé à un outil électrique, le contenu de licence devient accessible (S305) au client acheteur de licence à l'aide d'une clé privée stockée dans le portefeuille du client acheteur de licence associé à l'outil électrique, moyennant quoi le client acheteur de licence est configuré pour fournir un accès au contenu de licence pour l'outil électrique pouvant fonctionner selon au moins une caractéristique parmi de multiples caractéristiques associées à des fonctions que l'outil électrique est apte à exécuter selon le contenu de licence.
